(19) Europäisches Patentamt
European Patent Office
Office européen des brevets

(11) **EP 2 993 855 A1**

(12) **EUROPEAN PATENT APPLICATION**

(43) Date of publication:
**09.03.2016 Bulletin 2016/10**

(51) Int Cl.:
*H04L 29/06* (2006.01)       *H04N 21/2343* (2011.01)
*H04L 12/18* (2006.01)

(21) Application number: **14306349.3**

(22) Date of filing: **02.09.2014**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **ALCATEL LUCENT**
**92100 Boulogne-Billancourt (FR)**

(72) Inventors:
• **Fadili, Moulay**
**92707 Colombes (FR)**

• **Sabah, Fateh**
**92707 Colombes (FR)**
• **Trinite, Benoit**
**92707 Colombes (FR)**

(74) Representative: **Therias, Philippe**
**Alcatel-Lucent International**
**148/152 route de la Reine**
**92100 Boulogne-Billancourt (FR)**

(54) **Method, conference router, system and computer-readable medium for transmitting video streams**

(57)     A transmission method of at least two video streams constituted of a plurality of video packets each video streams is associated to an audio stream; the method comprising a step of estimating a first number and a second number using a delay of processing the audio streams associated to the video streams and a step of interleaving a first number of video packets of one of the video streams with a second number of video packets of another video streams.

301
Estimating first and second number

302
Interleaving

Figure 3

EP 2 993 855 A1

**Description**

FIELD OF INVENTION

The present subject matter relates to transmission of audio and video data streams using telecommunication networks and, particularly but not exclusively, to the interleaving of the data packets, contained inside the data streams.

BACKGROUND

Video real time communications such as multi party video conferences are more and more used in the enterprise communication. The video routing conference is a multi-image conference without video mixing in a server or in a router. The server or router receives the video streams of each participant and routes and sends the whole video streams to all the participants.

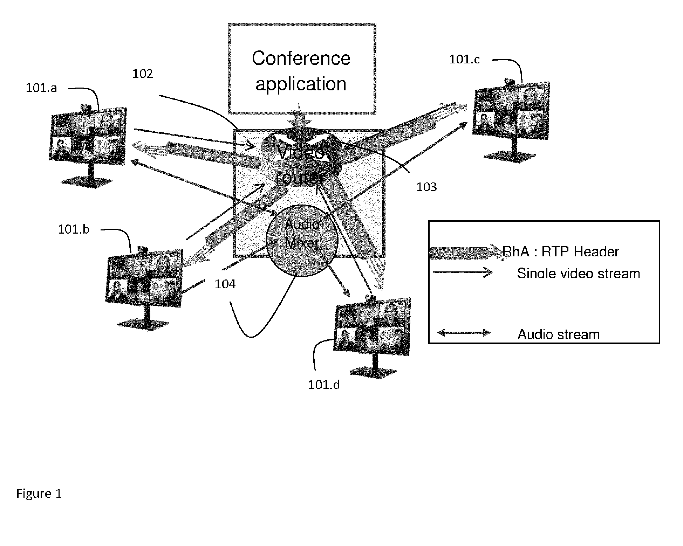

The figure 1 shows an example of video routing conference system. This system comprises several video routing clients (VRC). These video routing clients are also called user devices and are referenced 101.a to 101.d and each video routing client is able to receive and decode several video streams received from the other video routing clients. The system also comprises a conference router 102. This conference router 102 handles the transmissions of video and audio streams between the different video routing clients. The transmission of video streams is realized via a video router 103. The transmission of audio streams is realized via an audio mixer 104. These video router and audio mixer (103 and 104) are integrated inside the conference router 102.

In a nutshell in this system the audio mixing is done in a centralized way by the audio mixer and the video mixing is done in a decentralized way by the different clients. Each end user client sends its video stream to the router/server. The server multiplexes streams and sends them to other participants. The client receives many video streams and decodes them, then mixes the decoded images.

SUMMARY

This summary is provided to introduce concepts related of audio and video data streams using telecommunication networks and, particularly but not exclusively, to the interleaving of the data packets, contained inside different data streams.

In one implementation a transmitting method is described. This transmission method allow the transmission of at least two video streams constituted of a plurality of video packets each video stream is associated to an audio stream; the method comprising:

a step of estimating a first number and a second number using a delay of processing the audio streams associated to the video streams and
a step of interleaving a first number of video packets of one of the video streams with a second number of video packets of another video streams.

In one implementation a conference router is described. This conference router comprises an audio mixer and video router. The video router comprises at least one processor and at least one memory coupled to the processor. The memory comprises a estimating module configured to estimate a first number and a second number using a delay of incoming audio streams associated to the video streams, a interleaving module configured to interleave a first number of video packets of one of the video streams with a second number of video packets of another video streams.

In one implementation a system is described. This system comprises at least two user devices and a conference router. This conference router comprises an audio mixer at least one processor and at least one memory coupled to the processor. The memory comprises a estimating module configured to estimate a first number and a second number using a delay of incoming audio streams associated to the video streams, and a interleaving module configured to interleave a first number of video packets of one of the video streams with a second number of video packets of another video streams.

In one implementation a computer-readable medium is described. This computer-readable medium has embodied thereon a computer program for transmitting at least two video streams constituted of a plurality of video packets each video streams is associated to a audio streams. The method comprises:

a step (301) of estimating a first number and a second number using a delay of incoming audio streams associated to the video streams and
a step (302) of interleaving a first number of video packets of one of the video streams with a second number of video packets of another video streams.

BRIEF DESCRIPTION OF THE FIGURES

The detailed description is described with reference to the accompanying figures. In the figures, the left-most digit(s) of a reference number identifies the figure in which the reference number first appears. The same numbers are used throughout the figures to reference like features and components. Some embodiments of system and/or methods in accordance with embodiments of the present subject matter are now described, by way of example only, and with reference to the accompanying figures, in which:

Figure 1 illustrates an example of video routing conference system.

Figure 2 illustrates a way of applying a linear FEC to several video streams.

The figure 3 presents an embodiment of a method for transmitting two video streams.

The figure 4 presents an embodiment of a system using the method object of the preset subject matter.

The figure 5 presents the repartition of sent packets to a user.

In the present document, the word "exemplary" is used herein to mean "serving as an example, instance, or illustration." Any embodiment or implementation of the present subject matter described herein as "exemplary" is not necessarily to be construed as preferred or advantageous over other embodiments.

It should be appreciated by those skilled in the art that any block diagrams herein represent conceptual views of illustrative systems embodying the principles of the present subject matter. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

DESCRIPTION OF EMBODIMENTS

The figure 1 shows an example of video routing conference system. This system comprises several Video Routing Clients (VRC). These video routing clients are also called user devices and are referenced 101.a to 101.d and each video routing client is able to receive and decode several video streams received from the other video routing clients. The system also comprises a conference router 102. This conference router 102 handles the transmissions of video and audio streams between the different video routing clients. The transmission of video streams is realized via a video router 103. The transmission of audio streams is realized via an audio mixer 104. These video router and audio mixer (103 and 104) are integrated inside the conference router 102.

The aims of the video router 103 are to receive the video streams coming from end users and to forward to other users according to the capacity of the user and to available bandwidth between the different user devices.

The aims of this audio mixer 104 are to decode audio streams received from each video routing clients, to mix the audio samples of the different audio streams, to encode the mixed audio samples in a single audio stream and to send this single audio stream to each video routing client.

In a nutshell in this system the audio mixing is done in a centralized way by the audio mixer and the video mixing is done in a decentralized way by the different clients. Each end user client sends its video stream to the router/server. The server multiplexes streams and sends them to other participants. The client receives many video streams and decodes them, then mixes the decoded images.

During a video conference the video quality is very sensitive to network impairments; many solutions were introduced to deal with this issue. These solutions can be divided in two groups:

- The first group of solutions is using channel coding with error resilience. The channel coding is based on the use of FEC (Forward error correction) or a retransmission mechanism. The retransmission mechanism is powerful in the low latency situation but inefficient in high latency for real time communication. In some situation both retransmission mechanism and FEC can be used however in situation where the retransmission mechanism is not useful, only a FEC is used.
- The second group of solutions is using a source coding comprising error resilience. The source coding comprising error resilience depends on the used video codec. As an example the H264 AVC codec can be used with:

    o FMO (Flexible Macro Block). It enhances the spatial interpolation of lost blocks
    o RS (Redundant Slices): the encoder can send an extra representation of picture/region at lower fidelity. The Decoder can use the lower fidelity information when the main stream is corrupted.

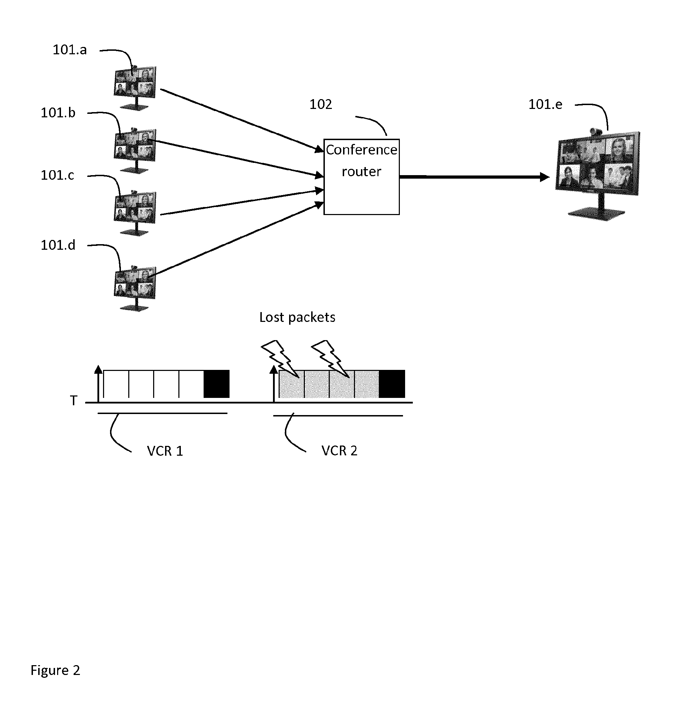

The figure 2 describes a way of applying a FEC algorithm to several different video streams. When applied to real time communication the FEC has limits. It's not easy to use known complex and powerful methods without introducing a very high level of latency. The latency leads to the loss of lips synchronization. So in order to mitigate this loss of lips synchronization several video routing conference systems use a linear FEC in order to encode the video real time communication. In figure 2 four different VCRs (101.a to 101.d) transmit their video streams to a fifth VCR (101.e). This transmission is done via the conference router 102. Within the conference router and more precisely in the video router a FEC packet is added to each predetermined number of video stream packets. In the figure 2 the packets (data and FEC) associated to a given VCR are sent in consecutive time slots.

When using a linear FEC code (one FEC packet is used to code and protect the N previously send media packets as presented in the bottom of the figure 2), if one packet is lost in the sequence of N media packets, the FEC algorithm will reconstruct perfectly the lost packet. However if more than one packet, even non consecutive packets, are lost in the sequence of N media packets protect by one FEC packet, it's impossible to reconstruct the lost packets.

In the example of the figure 2 as a linear FEC is applied to ensure the low latency of packet reconstruction for real time conference. As the clocks of clients are independents, there is no synchronization of the packet emission from each client to the conference router. In the example of figure 2, the frame rate is of 25images/s, so all packets of one frame from each client should be received within 40ms. In the example of figure 2 the packets from client 1 are received first, followed by packet of user two and packet of user three and four. One packet of user four is received before the last packet of user three. Of course other situation can occur as there is no clock synchronization between the clients. As two packets of user two streams are lost, the FEC mechanism con not reconstructs these packets.

In order to solve this problem, different embodiments can be used. In one of this embodiment a high redundancy FEC can be used. However this solution introduces a high over head so a bandwidth consumption. If no reduction of video bit-rate is done to compensate the FEC bandwidth consumption, the network impairment such us congestion and packet loss will increase. That will lead to poor quality of the experience of the end user. If the video bit-rate is reduced to compensate the FEC consumption, the result quality of video will be poor because the quality decrease when the bit-rate decreases (this effect is also named block effect).

In another embodiment a powerful FEC codes such as Reed Solomon (RS) code can be applied. However this solution introduces a high level of latency on video stream that leads to lips de-synchronization. In order to avoid this lips de-synchronization, in a embodiment the audio streams can be delayed. However this solution introduces a high level of latency on audio and video streams that leads to the loss of interactivity during the conference. As the interaction is useful when doing a video conference this solution can only used for broadcast of video audio streams without any feedback interactions.

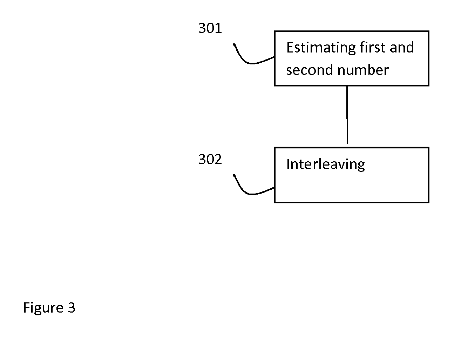

The figure 3 presents a method for transmitting two video streams. Each video streams are constituted of a plurality of video packets. Each video stream is associated to an audio stream. The method comprises a step 301 of estimating a first number and a second number using a delay of incoming audio streams associated to the video streams. The method also comprises a step 302 of interleaving a first number of video packets of one of the video streams with a second number of video packets of another video streams.

In another words the basic idea is to exploit the nature of video routing conference and to force the interleaving of packets sent by different clients. So instead of protecting the full video stream composed by multiple sub-streams using a FEC code, each sub-stream will be protected independently of other with a FEC code. Then packet of each sub-stream will be interleaved to decrease drastically the probability of burst packet loss on one sub-stream even a burst packet loss occurs in the full main stream.

In an embodiment a sip negotiation or RTCP based negotiation or Web services could be used to negotiate the use of FEC mechanism between the clients and server. This is also used to negotiate the parameters of the FEC mechanism. As an exemplary the protocol described inside the RFC 5109 "RTP Payload Format for Generic Forward Error Correction" can be used for FEC negotiation. RTP means Real-time Transport Protocol and defines a standardized packet format for delivering audio and video over IP networks.

In an embodiment an SSRC based video stream multiplexing can be used. (SSRC stands for Synchronization SOURCE identifier. SSRC is a field of RTP header that identifies the source of an RTP stream) However other RTP sub stream multiplexing could be used such as payload type multiplexing.

In an embodiment the different packets of the different FEC streams are also multiplexed using an SSRC based multiplexing. So if SSRC base multiplexing is used for both FEC streams and video streams, each video stream and its associated FEC stream has the same SSRC and different payload type.

In an embodiment the method of the present subject matter comprises also a step of estimating a delay of a di-jitter buffer and/or a delay of decoding the audio stream and/or a delay of voice enhancement devices and/or a delay of encoding the audio stream. In this embodiment the step 301 of estimating the first number and the second number is also configured to estimate these first and second numbers using a delay of a di-jitter buffer and/or a delay of decoding the audio stream and/or a delay of voice enhancement devices and/or a delay of encoding the audio stream.

In another words, we calculate the delay of audio processing, to know how maximum delay we can apply to the video streams to allow the interleaving mechanism. Then we use a dynamic buffer to store temporarily the video streams. The buffer is a so called first in first out buffer (FIFO). Then we apply the interleaving, and then we apply a FEC to each video interleaved sub stream.

In an embodiment the method, object of the present subject matter, contains the following steps:

a step of estimating, associated to the incoming audio streams, a delay of a di-jitter buffer and/or a delay of decoding the audio stream and/or a delay of voice enhancement devices and/or a delay of encoding the audio stream,

a step 301 of estimating the first number and the second number is also configured to estimate these first and second numbers using a delay of a di-jitter buffer and/or a delay of decoding the audio stream and/or a delay of voice enhancement devices and/or a delay of encoding the audio stream,

a step of adapting a buffer size (the number of video frames) using the first and second number. Indeed as there is no video processing (no transcoding) in the video routing server, the delay of video streams will be the delay of buffering. So we adapt the buffer size (the number of video frames) according to the audio delay,

a step of applying the RTP header (TimeStamp, SSRC, PT, SeqNum). This adaptation is needed in video routing,

a step 302 of interleaving a first number of video packets of one of the video streams with a second number of video packets of another video streams, and

a step of applying the FEC for each video streams: the FEC packet could be also interleaved with Media packet or could be sent at the end of media packet interleaving.

The delay of processing the audio streams (Audio Delay) associated to the video streams is calculated by using the following formula:

$$Audio\ Delay = Jitter\ Delay + Decompression\ Delay + VED\ Delay + Mixing\ delay \\ + Compression\ Delay + Compression\ algorithm\ Delay$$

In this formula:

$$Jitter\ Delay: number\ of\ Frame * Frame\ duration$$

$$Frame\ duration = Frame\ size\ /\ Sampling\ Rate$$

*Decompression Delay* is the time used by the central processing unit (CPU) to process decoding.
*Compression Delay* is the time used by the central processing unit (CPU) to process the encoding.
*VED Delay:* depends on the VED:

- AGC delay: Processing Delay (no algorithm delay)

- Resampler: Processing Delay + Filter Group Delay

- Noise Reduction: Processing Delay + Filter Group Delay

$$Mixing\ delay = Mixing\ procecing\ time\ (\text{timer delta}).$$

*Compression algorithm delay* (known also as look ahead delay): depends on used codec. For examples within the g.723.1 algorithm this delay is 7.5ms and within the g.711 algorithm this delay is 0ms

The first and second numbers of packets used to do the interleaving are obtained by using the following example of Video (First In First Out) FIFO management that used direct exploiting of incoming video timestamps.

The video buffer contains packets of video frames. A frame is composed of RTP packets having the same TimeStamp. We need to reach *LastVideoFrame_TS - FirstVideoFrame_TS* closed to *Audio Delay.* As we cannot control the video incoming rate, we have to adjust the outgoing rate to control the video Buffer. So when we need to increase the video FIFO we have to decrease the outgoing rate, and if we need to decrease the FIFO, we have to increase the outgoing rate.

$$Outgoing\ Rate\ =\ incoming\ Video\ FPS\ *\ \mu.$$

$$\mu\ =\ function(Audio\ Delay, Video\ FiFo\ Delay)$$

The function used to obtain $\mu$ can be realized using the following steps:

*Temp*0 = *Video delay* (in ms)

*Tmp*1 = *Audio delay* (in ms)

*If* (*Tmp_v* = 0) *Tmp*0 = 1

*If* (*rmp_a* = 0) *Tmp*1 = 1

*Result = Tmp_v/Tmp_a*

*If* (*Result* > 1.5) *Result* = 1.5

*If* (*Result* < 0.5) *Result* = 0.5

$\mu$ = *Result*

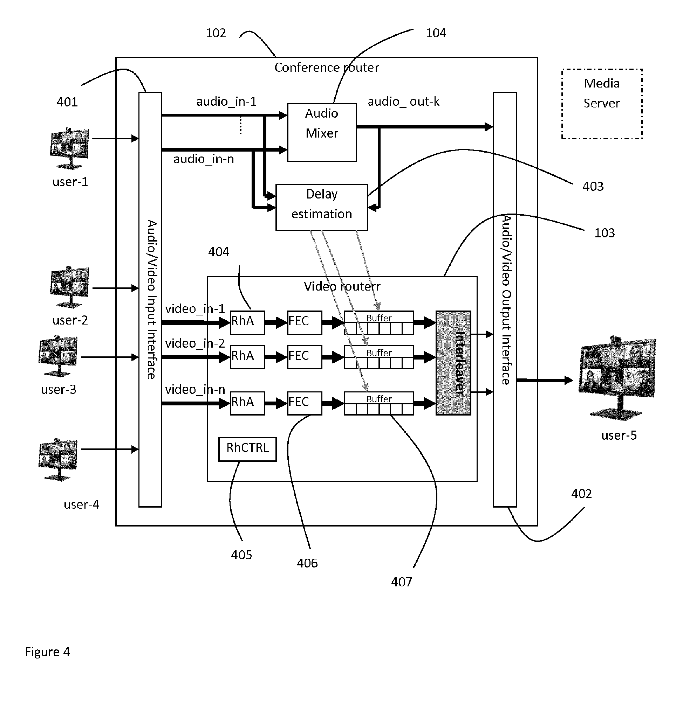

The figure 4 presents an embodiment of a conference router 102 using the method object of the preset subject matter. This conference router 102 comprises a video router 103, an audio/video input interface 401, an audio/video output interface 402, an audio mixer 104 and a delay estimation module 403.

In an embodiment this delay estimation module is realized using one or more processor(s), I/O interface(s), a memory coupled to the processor(s). The processor(s) may be implemented as one or more microprocessors, microcomputers, microcontrollers, digital signal processors, central processing units, state machines, logic circuitries, and/or any devices that manipulate signals based on operational instructions. The processor(s) can be a single processing unit or a number of units, all of which could also include multiple computing units. Among other capabilities, the processor(s) are configured to fetch and execute computer-readable instructions stored in the memory. The reception means are configured to receive information about at least one parameter of an interference signal, and the transmission means are configured to transmit the first and/or second channel quality indicators.

The functions realized by the processor may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included.

The memory may include any computer-readable medium known in the art including, for example, volatile memory, such as static random access memory (SRAM) and dynamic random access memory (DRAM), and/or non-volatile memory, such as read only memory (ROM), erasable programmable ROM, flash memories, hard disks, optical disks, and magnetic tapes. The memory includes modules and data. The modules include routines, programs, objects, components, data structures, etc., which perform particular tasks or implement particular abstract data types. The data, amongst other things, serves as a repository for storing data processed, received, and generated by one or more of the modules.

This delay estimation module 403 makes the estimation of the delay added by the audio processing of the different audio streams. The video router comprises RTP header adapters 404, a RTP Header ControlMultiplexed video streams module 405, FECs 406 and buffers 407 used to do the buffering of the different packet of the video streams. This buffering is necessary to allow the interleaving module to interleave the different video packets associated to different video streams.

In an embodiment the video router 103 also comprises at least one processor and at least one memory coupled to the processor. The memory comprises an interleaving module configured to interleave a first number of video packets from a second number of video streams and a estimating module configured to estimate the first number and the second number using a delay of incoming audio streams associated to the video streams.

As previously explained, the functions realized by the processor of the video router may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included.

As previously explained, the memory of the video router may include any computer-readable medium known in the art including, for example, volatile memory, such as static random access memory (SRAM) and dynamic random access memory (DRAM), and/or non-volatile memory, such as read only memory (ROM), erasable programmable ROM, flash memories, hard disks, optical disks, and magnetic tapes. The memory includes modules and data. The modules include routines, programs, objects, components, data structures, etc., which perform particular tasks or implement particular abstract data types. The data, amongst other things, serves as a repository for storing data processed, received, and generated by one or more of the modules.

In an embodiment of the figure 4 the conference router is also configured to realize synchronization between the audio stream and the video stream. The aim of this synchronization is to obtain a so called lips synchro. This synchronization is realized via the configuration of the buffers of the system. In this embodiment the Audio Mixer block performs the audio conference. Each incoming stream and outgoing stream can have different audio processing such as audio jitter buffer, noise reduction, automatic gain Control, wide band codecs. Each of these audio processing have direct impact on the delay of voice crossing this module. The delay estimation module performs the extra delay estimation introduced by these elements. The delay is an addition of different delay introduced by each crossed audio processing element (not explicitly described in the figure 4). The delay estimation block informs dynamically the video buffer of each outgoing leg about the delay of audio. According to this delay the video buffer adapts its tail. This adaptation is performed smoothly. For each outgoing video stream, the RTP packets are analyzed to estimate the Frame Per Second or FPS (estimated using RTP timestamp). The FPS provides the duration of each frame in millisecond. Each frame is composed of many RTP packets (minimum one packet, the maximum depends on the bitrate).

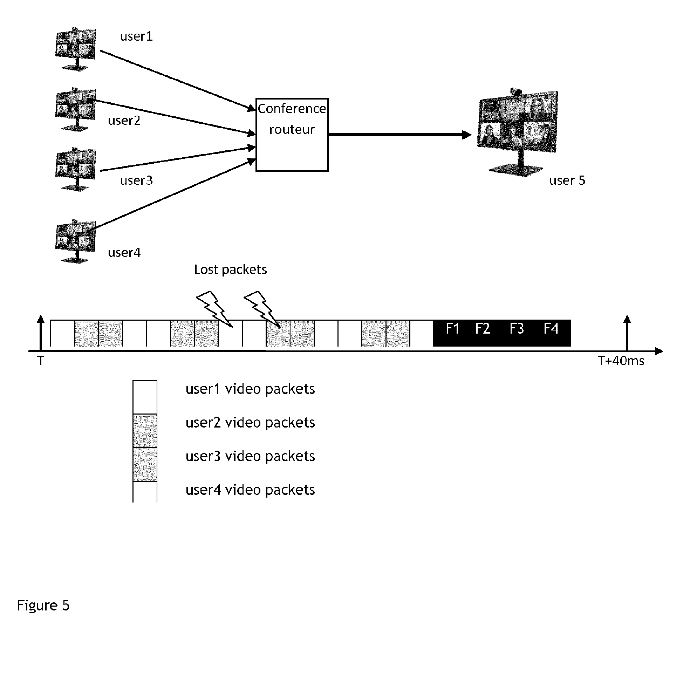

The figure 5 presents, when the interleaving is performed, the repartition of sent packets to a user. Using the method of the present subject matter the FEC packets F2 and F4 will reconstruct the two lost packets associated to two different video streams.

A person skilled in the art will readily recognize that steps of the methods, presented above, can be performed by programmed computers. Herein, some embodiments are also intended to cover program storage devices, for example, digital data storage media, which are machine or computer readable and encode machine-executable or computer-executable programs of instructions, where said instructions perform some or all of the steps of the described method. The program storage devices may be, for example, digital memories, magnetic storage media, such as a magnetic disks and magnetic tapes, hard drives, or optically readable digital data storage media.

In an embodiment of the subject matter, the method for transmitting at least two video streams described figure 3 can be performed by programmed computers. The video streams are constituted of a plurality of video packets each video streams is associated to a audio streams. The method comprises a step 301 of interleaving a first number of video packets from a second number of video streams and a step 302 of estimating the first number and the second number using a delay of incoming audio streams associated to the video streams.

**Claims**

1. A transmission method of at least two video streams constituted of a plurality of video packets each video stream is associated to an audio stream; the method comprising:

   a step (301) of estimating a first number and a second number using a delay of processing the audio streams associated to the video streams and

a step (302) of interleaving a first number of video packets of one of the video streams with a second number of video packets of another video streams.

2. The transmission method as claimed in claim 1 also comprising a step of estimating the delay of processing the audio streams by using a delay of a di-jitter buffer and/or a delay of decoding the audio stream and/or a delay of voice enhancement devices and/or a delay of encoding the audio stream.

3. The transmission method as claimed in claim 1 or 2 comprising:

   a further step of adapting a buffer size using the first and second number.

4. The transmission method as claimed in any of the claims 1 to 3 comprising:

   a further step of applying a RTP header to the interleaved video packets.

5. The method as claimed in any of the previous claims comprising;
   a further step of applying a FEC to at least one of the video streams.

6. A conference router, comprising
   an audio mixer,
   a video router, the video router comprises
   at least one processor;
   and at least one memory coupled to the processor,
   the memory comprising
   a estimating module configured to estimate a first number and a second number using a delay of incoming audio streams associated to the video streams,
   a interleaving module configured to interleave a first number of video packets of one of the video streams with a second number of video packets of another video streams.

7. The conference router according to the claim 6 also comprising a audio and/or video input interface,
   a audio and/or video output interface,
   a audio mixer

8. A system comprising;
   at least two user devices and
   a conference router comprising:

   an audio mixer,
   at least one processor;
   and at least one memory coupled to the processor,
   the memory comprising
   a estimating module configured to estimate a first number and a second number using a delay of incoming audio streams associated to the video streams,
   a interleaving module configured to interleave a first number of video packets of one of the video streams with a second number of video packets of another video streams.

9. The system according to the claim 8 wherein the conference router also comprises
   a audio and/or video input interface,
   a audio and/or video output interface,
   a audio mixer.

10. A computer-readable medium having embodied thereon a computer program for transmitting at least two video streams constituted of a plurality of video packets each video streams is associated to a audio streams; the method comprising:

    a step (301) of estimating a first number and a second number using a delay of incoming audio streams associated to the video streams and
    a step (302) of interleaving a first number of video packets of one of the video streams with a second number of video packets of another video streams.

Conference
application

101.a

102

101.c

Video
router

103

101.b

Audio
Mixer

104

101.d

RhA : RTP Header
Single video stream

Audio stream

Figure 1

101.a

101.b

101.c

102

101.e

Conference router

101.d

Lost packets

T

VCR 1

VCR 2

Figure 2

301 Estimating first and
second number

302 Interleaving

Figure 3

Figure 4

user1

user2

user3

user4

Conference routeur

user 5

Lost packets

| | | | | | | | | | | | | | | | | F1 | F2 | F3 | F4 |

T                                                                T+40ms

user1 video packets

user2 video packets

user3 video packets

user4 video packets

Figure 5

Europäisches
Patentamt

European
Patent Office

Office européen
des brevets

**EUROPEAN SEARCH REPORT**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2008/117937 A1 (FIRESTONE SCOTT [US] ET AL) 22 May 2008 (2008-05-22)<br>* abstract *<br>* paragraph [0024] - paragraph [0033]; claim 1 *<br>----- | 1-10 | INV.<br>H04L29/06<br>H04N21/2343<br>H04L12/18 |
| A | US 5 844 600 A (KERR GORDON [CA])<br>1 December 1998 (1998-12-01)<br>* abstract *<br>* column 4, line 19 - column 13, line 7 *<br>----- | 1-10 | |
| | | | TECHNICAL FIELDS SEARCHED (IPC)<br><br>H04L<br>H04N |

The present search report has been drawn up for all claims

| Place of search | Date of completion of the search | Examiner |
|---|---|---|
| The Hague | 5 February 2015 | Stergiou, Christos |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

**EP 2 993 855 A1**

## ANNEX TO THE EUROPEAN SEARCH REPORT
## ON EUROPEAN PATENT APPLICATION NO.

EP 14 30 6349

This annex lists the patent family members relating to the patent documents cited in the above-mentioned European search report.
The members are as contained in the European Patent Office EDP file on
The European Patent Office is in no way liable for these particulars which are merely given for the purpose of information.

05-02-2015

| Patent document cited in search report | | Publication date | Patent family member(s) | | Publication date |
|---|---|---|---|---|---|
| US 2008117937 | A1 | 22-05-2008 | EP 2057766 A2<br>US 2008117937 A1<br>WO 2008066593 A2 | | 13-05-2009<br>22-05-2008<br>05-06-2008 |
| US 5844600 | A | 01-12-1998 | CA 2231780 A1<br>EP 0850538 A1<br>US 5844600 A<br>WO 9710674 A1 | | 20-03-1997<br>01-07-1998<br>01-12-1998<br>20-03-1997 |

EPO FORM P0459

For more details about this annex : see Official Journal of the European Patent Office, No. 12/82